# EUROPEAN PATENT SPECIFICATION

(11) **EP 1 098 840 B1**
(45) Date of publication and mention of the grant of the patent: **14.08.2002**
(21) Application number: 99931148.3
(22) Date of filing: 23.06.1999
(51) Int. Cl.: C01B 3/38, B01J 23/40, B01J 37/02

(54) **CATALYTIC PARTIAL OXIDATION WITH TWO CATALYTICALLY-ACTIVE METALS**
KATALYTISCHE TEILOXIDATION MIT ZWEI KATALYTISCH-AKTIVEN METALLEN
OXYDATION CATALYTIQUE PARTIELLE VIA DEUX METAUX A ACTIVITE CATALYTIQUE

(30) Priority: 30.06.1998 EP 98305179
(43) Date of publication of application: 16.05.2001
(73) Proprietor: SHELL INTERNATIONALE RESEARCH MAATSCHAPPIJ B.V., 2596 HR Den Haag (NL)
(72) Inventor: ASSINK, Gerrit, Jan, Barend, NL-1031 CM Amsterdam (NL); HUISMAN, Hans, Michiel, NL-1031 CM Amsterdam (NL); KRAMER, Gert, Jan, NL-1031 CM Amsterdam (NL); SCHOONEBEEK, Ronald, Jan, NL-1031 CM Amsterdam (NL); WIELDRAAIJER, Wim, NL-1031 CM Amsterdam (NL)
(86) International application number: PCT/EP99/04348
(87) International publication number: WO 00/00425

(56) References cited:
- EP-A- 0 462 593
- EP-A- 0 640 559
- GB-A- 2 274 284

## Description

The present invention relates to a catalyst or a precursor thereof in the form of a fixed arrangement or in the form of catalyst (precursor) particles, and to the use of the catalyst, especially in a process for the catalytic partial oxidation of a hydrocarbonaceous feedstock.

The partial oxidation of hydrocarbons, for example methane or natural gas, in the presence of a catalyst is an attractive route for the preparation of mixtures of carbon monoxide and hydrogen, known in the art as synthesis gas. The partial oxidation of a hydrocarbon is an exothermic reaction and, in the case in which methane is the hydrocarbon, proceeds by the following reaction: ${\text{2CH}}_{\text{4}} {\text{+ O}}_{\text{2}} {\text{→ 2CO + 4H}}_{\text{2}}$

A mixture of carbon monoxide and hydrogen prepared by this process is particularly suitable for use in the synthesis of hydrocarbons, for example by means of the Fisher-Tropsch synthesis, or the synthesis of oxygenates, for example methanol. Processes for the conversion of the mixture of carbon monoxide and hydrogen into such products are well known in the art.

Hydrogen, or a mixture of hydrogen with other gases prepared by this process may be particularly suitable for use as a combustible fuel either directly or indirectly.

The catalytic partial oxidation process could very suitably be used to provide the hydrogen feed for a fuel cell. In fuel cells, hydrogen and oxygen are passed over the fuel cell in order to produce electricity and water. Fuel cell technology is well known in the art.

In order to obtain high yields of carbon monoxide and hydrogen, it is for thermodynamic reasons preferred to operate the partial oxidation process at relatively high temperatures.

The literature contains a number of documents disclosing details of experiments relating to the catalytic oxidation of hydrocarbons, in particular methane, employing a wide range of catalysts. Reference is made for instance to US 5,149,464 and WO 92/11199.

To be commercially attractive, a catalytic partial oxidation process should be able to operate at relatively severe conditions, i.e. the combination of high temperature and high gas hourly space velocity. An important factor when considering a catalyst for application in a commercial process, is the stability of that catalyst under the prevailing process conditions.

EP-A-0 629 578 discloses that, at a temperature of at least 950 °C and at a very high gas hourly space velocity, a marked difference in the stability of the Group VIII metal catalysts exists. It has been found that catalysts comprising rhodium, iridium or ruthenium display a significantly higher stability in terms of both selectivity and activity than the remaining Group VIII metal catalysts.

US 5,648,582 concerns a catalytic partial oxidation process at very high gas hourly space velocity and at a catalyst temperature in the range of from 850 to 1150 °C using a catalyst comprising rhodium, nickel or platinum.

WO 97/37929 concerns equipment for carrying out catalytic partial oxidation reactions. It is mentioned that a catalyst bed having a first layer comprising rhodium and a second layer comprising ruthenium or nickel may be used, in order to reduce the amount of rhodium used.

Although ruthenium and nickel are relatively cheap materials and therefore attractive for the use as catalytically-active metals, a major disadvantage of the use of ruthenium or nickel in catalytic partial oxidation is, however, that a relatively large amount of undesired trace components such as ammonia and hydrogen cyanide is formed.

In WO 95/18063, for example, it is disclosed that partial oxidation catalysts comprising rhodium, iridium or platinum as the catalytically-active metal, generate significantly lower amounts of ammonia and hydrogen cyanide than catalysts comprising other catalytically-active metals. It is shown in the examples that a ruthenium-containing catalyst generates a relatively large amount of ammonia and hydrogen cyanide.

In GB 2,274,284 is disclosed a catalytic partial oxidation process using a catalyst arranged as a plurality of fixed catalytic beds in cascade to each other. In order to create a plurality of adiabatic layers, heat is removed between the catalyst beds or cold streams of reactants are introduced between the beds. In a preferred embodiment, the catalyst of the first catalytic bed comprises rhodium in association with platinum or palladium and the catalyst(s) of the subsequent catalytic bed(s) contain two metals selected from rhodium, ruthenium and iridium.

There still exists a problem in the art in that catalysts comprising either rhodium or iridium slowly deactivate under the severe process conditions required for commercial operation to produce mixtures of carbon monoxide and hydrogen.

Surprisingly, it has now been found that the stability of a catalyst can be improved by using a combination of two catalytically-active metals in two different layers. In particular, it has been found that a catalyst in the form of a fixed arrangement, wherein a first layer comprises rhodium as the catalytically-active metal and a second layer comprises iridium, osmium or platinum as the catalytically-active metal, shows a slower deactivation rate than a catalyst comprising rhodium, iridium, osmium or platinum as the catalytically-active metal.

Thus, the present invention relates to a catalyst or a precursor thereof in the form of a fixed arrangement, wherein the fixed arrangement comprises
a first layer which is, during normal operation, located at the upstream end of the fixed arrangement and comprises as a catalytically active metal or precursor thereof rhodium or a rhodium compound and
a second layer adjacent to the first layer with no gap between the first and second layer, which is, during normal operation, located downstream of the first layer, the second layer comprising as a catalytically active metal or precursor thereof iridium, osmium or platinum or a compound thereof.

Reference herein to a first layer is to a layer which is, under operating conditions, situated at the upstream end of the fixed arrangement. The second layer is then (under operating conditions) situated downstream of the first layer, adjacent to the first layer. There is no gap between the first and the second layer. The fixed arrangement may contain more than two layers, but a two-layer arrangement is preferred.

The fixed arrangement may have any suitable form, provided that the arrangement is permeable to a fluid, especially to gas. The fixed arrangement suitably has a void fraction in the range of 0.4 to ⁻0.95, preferably in the range of 0.6 to 0.9. Examples of suitable fixed arrangements are a fixed bed of catalyst carrier particles, such as refractory oxide particles, an arrangements of wires or gauzes of a metal catalyst carrier material, or a porous, metal or ceramic, monolithic structure, such as a honeycomb or a foam, or combinations thereof. The fixed arrangement may also be in the form of wires or gauzes of the catalytically-active metal. The fixed arrangement of the present invention may be in the form of at least one porous monolithic structure.

Reference herein to a porous monolithic structure is to any single porous material unit, e.g. a metal or a refractory material unit, in which the pores constitute straight or tortuous, parallel or random elongate channels extending through the unit structure, i.e. having interconnected open-porosity. Reference herein to pores is to openings or spaces between adjacent portions or lands of the monolithic structure. Thus, it will be appreciated that the pores referred to in respect of the present invention have a nominal diameter of the order of magnitude of 0.05 to 5 mm. These are to be contrasted with the smaller pores, including micro- and mesopores, which may be present in the catalyst support material itself.

The porous monolithic structure may have any suitable form. One form of monolithic porous structure is that of a honeycomb. Honeycombs are characterised by having a plurality of straight, elongate, parallel channels extending through the structure. Preferred porous monolithic structures are foams, more preferably ceramic foams. Suitable ceramic foams are available commercially, for example from Selee Inc., Hi-Tech and Dytech.

Preferred ceramic foams have a number of pores per cm in the range of from 10 to 120, more preferably in the range of from 20 to 80 pores per cm.

Suitable catalyst carrier materials are well known in the art and include refractory oxides, such as silica, alumina, titania, zirconia and mixtures thereof, and metals. High-alloy, alumina-containing steel, such as fecralloy-type materials are particularly suitable metals. Preferred refractory oxides are zirconia-based, more preferably comprising at least 70% by weight zirconia, for example selected from known forms of (partially) stabilised zirconia or substantially pure zirconia. Most preferred zirconia-based materials comprise zirconia stabilised or partially-stabilised by one or more oxides of Mg, Ca, Al, Y, La or Ce. Most suitable carrier materials are Ce-ZTA (zirconia-toughened alumina) and Y-PSZ (partially-stabilised zirconia), both commercially available.

The fixed arrangement may have any shape. Suitably, the downstream end of the fixed arrangement is co-planar with the upstream end.

The fixed arrangement may be composed of different structures, for example a metal gauze as the first layer and a ceramic foam as the second layer.

If the fixed arrangement is in the form of a fixed bed of catalyst particles, the bed contains, at its upstream side, a first layer filled with catalyst (precursor) particles comprising rhodium or a rhodium compound as the catalytically-active metal (precursor), and, at the downstream side of the first layer, adjacent hereto, a second layer filled with particles comprising iridium, osmium or platinum or a compound thereof as the catalytically-active metal (precursor).

The present invention further relates to a catalyst or a precursor thereof in the form of catalyst (precursor) particles comprising a first, outer layer comprising as a catalytically active metal or precursor thereof rhodium or a rhodium compound and a second layer comprising as a catalytically active metal or precursor thereof iridium, osmium or platinum or a compound thereof. These catalyst particles may be used either in a fixed bed of particles or in a fluidised bed regime.

Suitably, the catalyst (precursor) particles of the present invention are catalyst carrier particles, such as refractory oxide particles, provided with the catalytically-active metals (precursors).

Preferably, the second layer of the catalyst of the present invention comprises iridium or an iridium compound as the catalytically active metal or precursor thereof.

Each layer of the catalyst may comprise the catalytically active metal in any suitable amount to achieve the required level of activity. In the case of a fixed arrangement, the catalytically-active metal of at least one of the layers may be present in the form of wires or gauzes of the catalytically-active metal. Preferably, the catalytically-active metals are supported on a catalyst carrier material.

Typically, each layer of the catalyst comprises the active metal in a concentration in the range of from 0.02 to 10% by weight, more preferably from 0.1 to 7.5% by weight based on the weight of the carrier material. The metal concentration typically is constant throughout each layer. Optionally, the first layer may also comprise the catalytically active metal of the second layer, i.e. iridium, osmium or platinum additionally to rhodium.

In an alternative embodiment of the fixed arrangement of the present invention, the concentration of the catalytically active metal of the first layer, i.e. rhodium, gradually decreases in one direction of the fixed arrangement and the concentration of the catalytically active metal of the second layer, i.e. iridium, osmium or platinum, gradually decreases in the other direction of the fixed arrangement.

Typically, the weight amount of catalytically-active metal in the second layer of the catalyst is at least equal to the amount of rhodium in the first layer, preferably the amount of catalytically-active metal in the second layer is greater than that in the first layer. More preferably the second layer comprises at least two times the amount of the first layer, even more preferably at least three times. The amount in the second layer is at most 50 times the amount in the first layer, preferably at most 20 times.

It has been found that the catalyst of the present invention can be further improved by adding platinum to the first layer. The addition of platinum minimises the risk that during start-up of the catalytic partial oxidation process, lit-off of the catalyst will take place at the second layer. Lit-off at the second layer will result in accelerated deactivation of the catalyst. The addition of platinum is especially advantageous in those application wherein start-up occurs frequently, for example in automotive applications, or in those catalysts wherein the amount of rhodium in the first layer compared to the amount of iridium in the second layer is relatively low. This can easily occur if the catalyst is in the form of a fixed arrangement wherein the first layer has a less dense structure than the second layer, e.g. a first layer consisting of an arrangement of metal wire or gauze and a second layer consisting of a ceramic foam.

Preferably, the rhodium-to-platinum weight ratio in the first layer is in the range of from 1 to 20, more preferably of from 5 to 15.

The catalyst carrier material may be provided with the catalytically active metals or precursors thereof by processes known in the art. Suitable processes are impregnation or washcoating of the catalyst carrier material with the catalytically active material or a precursor thereof. Impregnation typically comprises contacting the carrier material with a solution of a compound of the catalytically active material or precursor thereof, followed by drying and, optionally, calcining the resulting material. If more than one catalytically active material of precursor thereof should be provided, co-impregnation or sequential impregnation may be applied.

In the case of a fixed arrangement comprising one porous monolithic structure, the structure may be sequentially impregnated or washcoated with two different solution, each containing a different catalytically active metal compound or compounds. The layer that should not be impregnated may be provided with a wax or another material that prevents impregnation. Alternatively, the structure may be partially immersed during impregnation or washcoating.

Catalyst particles comprising a first, outer rhodium-containing layer and a second iridium-, osmium-, or platinum-containing layer may be prepared by impregnation or washcoating with the compound of the catalytically active metal of the second layer, followed by a impregnation or washcoating with the compound(s) of the catalytically-active metal(s) of the first layer.

The catalytically active metal or precursor thereof in at least one of the layers may be associated with at least one inorganic metal cation or a precursor thereof in such a way that the inorganic metal cation is present in intimate association, supported on or with the catalytically active metal, as described in International patent application PCT/EP99/00324.

The cation is selected from Groups IIA, IIIA, IIIB, IVA and IVB of the Periodic Table and the lanthanides for example Al, Mg, Zr, Ti, La, Hf, Si and Ba, of which Zr is preferred. The cation is preferably in the form of its oxide.

Reference herein to intimate association of the cation is to its incorporation in suitable manner on or with the metal thereby modifying the catalytic performance properties thereof.

Suitably therefore the intimate association of cation and catalytically active metal is present at the surface of the catalyst. Preferably, the catalyst comprises cation to metal in a ratio in excess of or equal to 1.0 at its surface, more preferably in excess of or equal to 2.0, even more preferably in excess of or equal to 3.0 up to a maximum only limited by the constraints of the method for constructing the catalyst, e.g. impregnation.

The catalytically active metal is essentially present as an intimate admixture with the metal cation or as layers which resemble an admixture. Preferably, the admixture is present substantially as a single layer or as separate clusters. The admixture may be present throughout the catalyst bed or may be present only in certain regions of the catalyst bed, for example in the leading edge of a fixed bed.

The thickness of a layer of metal cation as hereinbefore defined may be selected for optimum effect and may be determined by measurement of the selectivity of reaction and the like. Thickness is conveniently in the order of microns.

The present invention further relates to a process for the catalytic partial oxidation of a hydrocarbonaceous feedstock, which comprises contacting a feed comprising a hydrocarbonaceous feedstock and an oxygen-containing gas with a catalyst in the form of a fixed arrangement or in the form of catalyst particles as hereinbefore defined, preferable at a pressure in the range of from 1 to 150 bara, at a temperature in the range of from 750 to 1400 °C, and at a gas hourly space velocity in the range of from 20,000 to 100,000,000 Nl/kg/h. Reference herein to temperature is to the temperature of the gas leaving the catalyst.

The hydrocarbonaceous feedstock is in the gaseous phase when contacting the catalyst. The feedstock may contain compounds that are liquid and/or compounds that are gaseous under standard conditions of temperature and pressure (i.e. at 0 °C and 1 atm.).

The process is particularly suitable for the partial oxidation of methane, natural gas, associated gas or other sources of light hydrocarbons. In this respect, the term "light hydrocarbons" is a reference to hydrocarbons having from 1 to 5 carbon atoms. The process may be advantageously applied in the conversion of gas from naturally occurring reserves of methane which contain substantial amounts of carbon dioxide. The feed preferably comprises methane in an amount of at least 50% by volume, more preferably at least 70% by volume, especially at least 80% by volume.

The process is also suitable for the conversion of feedstocks being gaseous when contacting the catalyst during operation, but being liquid under standard conditions of temperature and pressure. Typically, these feedstocks have an average carbon number of at least 6 and contain up to 25 carbon atoms in their molecules. Examples of such feedstocks are hydrocarbons boiling in the range of from 50 °C to 500 °C, preferably in the range of from 60 °C to 350 °C. The process is particular suitable for the partial oxidation of naphtha feedstocks boiling between 35 and 150 °C, kerosene feedstocks boiling between 150 °C and 200 °C or synthetic gas oil feedstocks boiling between 200 °C and 500 °C, in particular between 200 °C and 300 °C.

It is possible to have hydrocarbonaceous material present in the feedstocks which is gaseous under standard conditions of temperature and pressure, together with material which is liquid under standard conditions of temperature and pressure and having an average carbon number of at least 6.

The process according to the present invention can also be carried out when the feedstock contains oxygenates (being gaseous, and having less than 6 carbon atoms, and/or being liquid under standard condition of temperature and pressure and having an average carbon number of at least 6). Oxygenates to be used as (part of) the feedstock in the process according to the present invention are defined as molecules containing apart from carbon and hydrogen atoms at least 1 oxygen atom which is linked to either one or two carbon atoms or to a carbon atom and a hydrogen atom. Examples of suitable oxygenates comprise methanol, ethanol, dimethyl ether and the like.

Also mixtures of hydrocarbons and oxygenates as defined hereinbefore can be used as feedstock in the process according to the present invention.

The hydrocarbonaceous feedstock is contacted with the catalyst as a mixture with an oxygen-containing gas. Suitable oxygen-containing gases are air, oxygen-enriched air or pure oxygen. The use of air as the oxygen-containing gas is preferred. The feed mixture may optionally comprise steam. Optionally, the feed mixture may comprise carbon dioxide in a concentration of up to 60% by volume of the total feed mixture, especially 0.1-40% by volume.

The hydrocarbonaceous feedstock and the oxygen-containing gas are preferably present in the feed in such amounts as to give an oxygen-to-carbon ratio in the range of from 0.3 to 0.8, more preferably, in the range of from 0.45 to 0.75. References herein to the oxygen-to-carbon ratio refer to the ratio of oxygen in the form of molecules (O₂) to carbon atoms present in the hydrocarbon feedstock. Oxygen-to-carbon ratios in the region of the stoichiometric ratio of 0.5, i.e. ratios in the range of from 0.45 to 0.65, are especially preferred. If oxygenate feedstocks are used, e.g. methanol, oxygen-to-carbon ratios below 0.3 can suitably be used. If steam is present in the feed, the steam-to-carbon ratio is preferably in the range of from above 0.0 to 3.0, more preferably from 0.0 to 2.0. The hydrocarbonaceous feedstock, the oxygen-containing gas and steam, if present, are preferably well mixed prior to being contacted with the catalyst. The feed mixture is preferably preheated prior to contacting the catalyst.

The feed is preferably contacted with the catalyst under adiabatic conditions. For the purposes of this specification, the term "adiabatic" is a reference to reaction conditions under which substantially all heat loss and radiation from the reaction zone are prevented, with the exception of heat leaving in the gaseous effluent stream of the reactor. A substantial prevention of all heat losses, means that heat losses are at most 5% of the net calorific value of the feed mixture, preferably at most 1% of the net calorific value.

The optimum pressure, temperature and gas hourly space velocity may vary with the scale and the purpose of the catalytic partial oxidation process. In general, more severe conditions, i.e. higher pressure, temperature and space velocity, are applied for large-scale, commercial production of synthesis gas, for example for use in Fischer-Tropsch hydrocarbon synthesis or for methanol synthesis, than for smaller scale applications, such as the provision of hydrogen for fuel cells.

The process of the present invention may be operated at any suitable pressure. For applications on a large scale, elevated pressures, that is pressures significantly above atmospheric pressure are most suitably applied. The process is preferably operated at pressures in the range of from 1 to 150 bara. More preferably, the process is operated at pressures in the range of from 2 to 100 bara, especially from 5 to 50 bara.

Under the preferred conditions of high pressure prevailing in processes operated on a large scale, the feed is preferably contacted with the catalyst at a temperature in the range of from 750 to 1400 °C, more preferably of from 850 to 1350 °C, even more preferably of from 900 to 1300 °C.

The feed may be provided during the operation of the process at any suitable space velocity. It is an advantage of the process of the present invention that very high gas space velocities can be achieved. Thus, gas space velocities for the process (expressed in normal litres of gas per kilogram of catalyst per hour, wherein normal litres refers to litres under STP conditions, i.e. 0 °C and 1 atm.) are preferably in the range of from 20,000 to 100,000,000 Nl/kg/h, more preferably in the range of from 50,000 to 50,000,000 Nl/kg/h. Space velocities in the range of from 500,000 to 30,000,000 Nl/kg/h are particularly suitable for the process of the present invention.

The invention will now be illustrated further by means of the following Examples.

### EXAMPLE 1 (comparative)

### Catalyst preparation

A ceramic foam containing 25 pores per cm (65 ppi) was crushed and the 0.17-0.55 mm particles (30-80 mesh fraction) were impregnated by immersion in an aqueous solution containing 7.8 wt% rhodium (as rhodium trichloride) and 11.2 wt% zirconium (as zirconium nitrate). The impregnated particles were dried at 140 °C and subsequently calcined at 700 °C for 2 hours. The resulting catalyst particles (catalyst A) comprised 5% by weight rhodium and 7% by weight zirconium based on the total weight of the calcined catalyst particles.

### Catalytic partial oxidation

A 6 mm diameter reactor tube was filled with 0.5 g of the rhodium-containing catalyst particles prepared as hereinbefore described. Nitrogen (914 Nl/h), oxygen (440 Nl/h), and methane (440 Nl/h) were thoroughly mixed and preheated to a temperature of 300 °C. The preheated mixture was fed to the reactor at a pressure of 11 bara. The methane conversion was monitored for 150 hours. The temperature of the gas leaving the catalyst bed was between 930 and 950 °C.

### EXAMPLE 2 (comparative)

### Catalyst preparation

A ceramic foam containing 25 pores per cm (65 ppi) was crushed and the 0.17-0.55 mm particles (30-80 mesh fraction) were impregnated by immersion in an aqueous solution of iridium chloride and zirconium nitrate. The impregnated particles were dried at 140 °C and subsequently calcined at 700 °C for 2 hours. The resulting catalyst particles comprised 5% by weight iridium and 7% by weight zirconium based on the total weight of the calcined catalyst particles.

### Catalytic partial oxidation

A 6 mm diameter reactor tube was filled with 0.5 g of the iridium-containing catalyst particles prepared as hereinbefore described. A catalytic partial oxidation experiment was performed using the same procedure as described in Example 1. The methane conversion was monitored for 250 hours. The temperature of the gas leaving the catalyst bed was between 930 and 950 °C.

### EXAMPLE 3 (according to the invention)

### Catalytic partial oxidation

A 6 mm diameter reactor tube was filled with 0.1 g of rhodium-containing catalyst particles on top of 0.4 g of iridium-containing catalyst particles prepared as hereinbefore described. A catalytic partial oxidation experiment was performed using the same procedure as described in Example 1. The methane conversion was monitored for 250 hours. The temperature of the gas leaving the catalyst bed was between 930 and 950 °C.

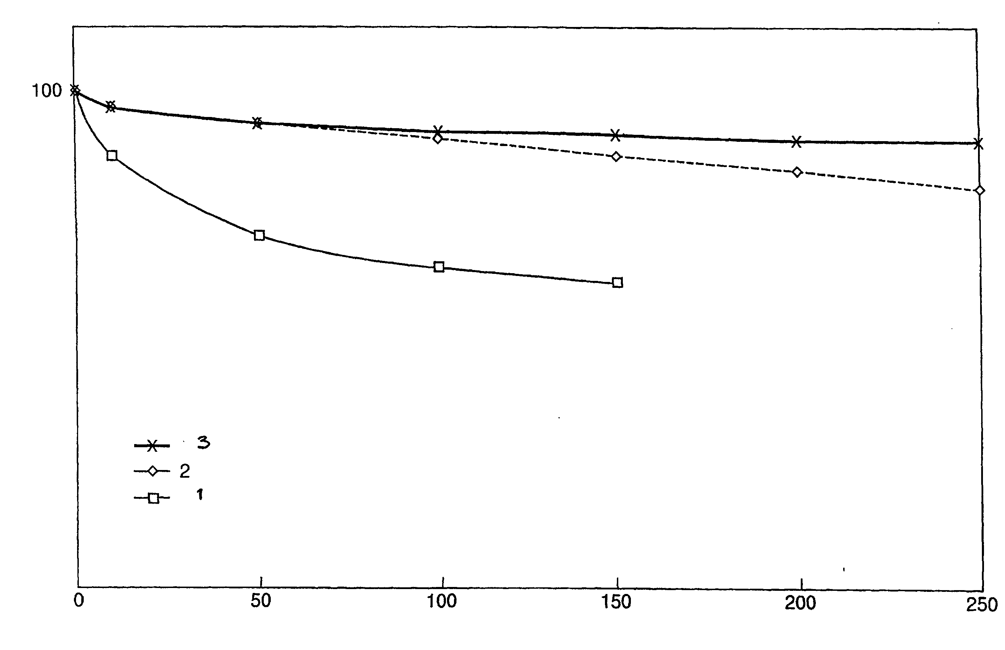

Figure 1 shows the methane conversion versus run time for examples 1 to 3 (indicated as 1, 2 and 3, respectively). The Y axis shows, on a linear scale, the methane conversion relative to the initial methane conversion, which is set on 100. The X axis shows the hours on stream. It is clear that the catalyst in the form of the fixed arrangement of the invention (example 3) shows a higher stability (lower deactivation rate) than the catalysts containing either rhodium or iridium. In a commercial operation, the observed difference in stability means an important improvement.

### EXAMPLE 4

### Catalyst preparation

A gauze of a commercially available Fecralloy wire (Ø 0.125 mm; ex Resistalloy, UK) was oxidised at 1100 °C for 48 h and subsequently dipcoated with a zirconia paint. The coated gauze was impregnated by immersing it twice in an aqueous solution containing 7.4 wt% Rh (as rhodium trichloride), 0.62 wt% Pt (as platinum hexachloroplatinic acid) and 11.1 wt% Zr (as zirconium nitrate). After each immersion, the gauze was dried at 140 °C and calcined for 2 hours at 700 °C. The resulting gauze comprised 1.7% by weight Rh, 0.14% by weight Pt, and 2.6% by weight Zr based on the total weight of the gauze.

A ceramic foam (Y-PSZ; ex Selee) containing 30 pores per cm (80 ppi) was impregnated with an aqueous solution containing iridium chloride and zirconium nitrate. The impregnated foam was dried at 140 °C and subsequently calcined at 700 °C for 2 hours. The resulting foam comprised 5% by weight Ir and 7% by weight Zr based on the total weight of the foam.

A 12 mm diameter reactor tube was filled with 1.74 g of the Rh/Pt/Zr gauze (first layer) on top of 1.57 g of the Ir/Zr foam (second layer), prepared as hereinbefore described.

### Catalytic partial oxidation

A catalytic partial oxidation experiment was performed as follows. Naphtha (306.5 g/h), steam (180 g/h), oxygen (220 Nl/h) and nitrogen (975 Nl/h) are thoroughly mixed and preheated to a temperature of 200 °C. This amounts to an oxygen-to-carbon ratio of the feed mixture of 0.45, a steam-to-carbon ratio of 0.46, and a gas hourly space velocity of approximately 450,000 Nl/kg/h. The preheated mixture was fed to the catalyst at a pressure of 6 bara.

To start-up the catalytic partial oxidation process, a small amount of hydrogen was added to the feed mixture. Approximately 30 minutes after start-up, the naphtha conversion was determined. After one hour the process was shut down. Start-up and naphtha conversion measurements were repeated twice. The results are shown in table 1.

### EXAMPLE 5

### Catalyst preparation

A coated Fecralloy gauze was prepared in the same manner as in example 4. The coated gauze was impregnated by immersing it twice in an aqueous solution containing 7.9 wt% Rh (as rhodium trichloride), and 11.8 wt% Zr (as zirconium nitrate). After each immersion, the gauze was dried at 140 °C and calcined for 2 hours at 700 °C. The resulting gauze comprised 3.1% by weight Rh and 4.6% by weight Zr based on the total weight of the gauze.

A 12 mm diameter reactor tube was filled with 1.50 g of the above-described Rh/Zr comprising gauze (first layer) on top of 1.57 g of an Ir/Zr comprising foam (second layer), prepared as described in example 4.

### Catalytic partial oxidation

A catalytic partial oxidation experiment was performed as in example 4. The results are shown in table 1.

**Table 1**

| Lit-off and naphtha conversion | | |
|---|---|---|
| | example 4 | example 5 |
| place of lit off | first layer (gauze) | second layer (foam) |
| naphtha conversion % (wt/wt)* | | |
| after 1^{st} start-up | 86.0 | 86.0 |
| after 2^{nd} start-up | 85.8 | 84.7 |
| after 3^{rd} start-up | 85.9 | 84.2 |

| | | |
|---|---|---|
| * naphtha conversion: amount (wt) of carbon oxides produced per amount (wt) of naphtha introduced. | | |

It can be seen in table 1 that the addition of platinum to the first layer results in lit-off of the catalyst at the first layer, whereas in the absence of platinum lit off occurs at the second layer. Lit-off at the second layer results in a decrease of naphtha conversion.

## Claims

1. A catalyst or a precursor thereof in the form of a fixed arrangement, wherein the fixed arrangement comprises
a first layer which is, during normal operation, located at the upstream end of the fixed arrangement and comprises as a catalytically active metal or precursor thereof rhodium or a rhodium compound and
a second layer adjacent to the first layer with no gap between the first and second layer, which is, during normal operation, located downstream of the first layer, the second layer comprising as a catalytically active metal or precursor thereof iridium, osmium or platinum or a compound thereof.

2. A catalyst or a precursor thereof in the form of catalyst particles or catalyst precursor particles comprising a first, outer layer comprising as a catalytically active metal or precursor thereof rhodium or a rhodium compound and a second layer comprising as a catalytically active metal or precursor thereof iridium, osmium or platinum or a compound thereof.

3. A catalyst or a precursor thereof according to claim 1 or 2, wherein the second layer comprises iridium or an iridium compound.

4. A catalyst or a precursor thereof according to any of the preceding claims, wherein the weight amount of the catalytically-active metal of the second layer is at least equal to the amount of rhodium in the first layer, preferably is at least two times the amount of rhodium in the first layer, more preferably at least three times.

5. A catalyst or a precursor thereof according to any of the preceding claims, wherein the first layer additionally comprises platinum or a platinum compound.

6. A catalyst or a precursor thereof according to claim 5, wherein the rhodium-to-platinum ratio (w/w) in the first layer is in the range of from 1 to 20, preferably of from 5 to 15.

7. A catalyst or a precursor thereof according to any of the preceding claims, wherein the catalytically active metal in at least one of the layers is associated with at least one inorganic metal cation or a precursor thereof in such a way that the inorganic metal cation is present in intimate association, supported on or with the catalytically active metal.

8. A catalyst or a precursor thereof according to claim 7, wherein the inorganic metal cation is selected from Groups IIA, IIIA, IIIB, IVA, IVB and the Lanthanides of the Periodic Table of the Elements, preferably is selected from Al, Mg, Zr, Ti, La, Hf, Si and Ba, more preferably is Zr.

9. A process for the catalytic partial oxidation of a hydrocarbonaceous feedstock, which process comprises contacting a feed comprising a hydrocarbonaceous feedstock and an oxygen-containing gas with a catalyst according to any of claims 1 to 8, preferably at a pressure in the range of from 1 to 150 bara, at a temperature in the range of from 750 to 1400 °C, and at a gas hourly space velocity in the range of from 20,000 to 100,000,000 Nl/kg/h.

10. A process according to claim 9, wherein the hydrocarbonaceous feedstock and the oxygen-containing gas are present in amounts giving an oxygen-to-carbon ratio of from 0.3 to 0.8, preferably of from 0.45 to 0.75.

## Patentansprüche

1. Katalysator oder einen Vorläufer hiervon in Form einer festen Anordnung, worin die feste Anordnung
eine erste Schicht enthält, die im Normalbetrieb am stromaufwärtigen Ende der festen Anordnung lokalisiert ist und als ein katalytisch aktives Metall oder Vorläufer hiervon Rhodium oder eine Rhodiumverbindung enthält und
eine zweite, der ersten Schicht benachbarte Schicht ohne Spalt zwischen der ersten und zweiten Schicht umfaßt, die im Normalbetrieb stromabwärts zur ersten Schicht lokalisiert ist, wobei die zweite Schicht als ein katalytisch aktives Metall oder Vorläufer hiervon Iridium, Osmium oder Platin oder eine Verbindung hiervon enthält.

2. Katalysator oder Vorläufer hiervon in Form von Katalysatorteilchen oder Katalysatorvorläuferteilchen, die eine erste, äußere Schicht mit einem Gehalt an Rhodium oder einer Rhodiumverbindung als ein katalytisch aktives Metall oder Vorläufer hiervon und eine zweite Schicht umfassen, die Iridium, Osmium oder Platin oder eine Verbindung hiervon als ein katalytisch aktives Metall oder Vorläufer hiervon umfaßt.

3. Katalysator oder Vorläufer hiervon nach Anspruch 1 oder 2, worin die zweite Schicht Iridium oder eine Iridiumverbindung umfaßt.

4. Katalysator oder Vorläufer hiervon nach einem der vorstehenden Ansprüche, worin die Gewichtsmenge des katalytisch aktiven Metalles der zweiten Schicht zumindest der Menge an Rhodium in der ersten Schicht gleich ist, vorzugsweise wenigstens das Zweifache der Rhodiummenge in der ersten Schicht beträgt, stärker bevorzugt wenigstens das Dreifache.

5. Katalysator oder Vorläufer hiervon nach einem der vorstehenden Ansprüche, worin die erste Schicht zusätzlich Platin oder eine Platinverbindung umfaßt.

6. Katalysator oder Vorläufer hiervon nach Anspruch 5, worin das Gewichtsverhältnis Rhodium/Platin in der ersten Schicht im Bereich von 1 bis 20, vorzugsweise 5 bis 15 liegt.

7. Katalysator oder Vorläufer hiervon nach einem der vorstehenden Ansprüche, worin das katalytisch aktive Metall in wenigstens einer der Schichten mit wenigstens einem anorganischen Metallkation oder einem Vorläufer hiervon in solcher Weise assoziiert ist, daß das anorganische Metallkation in inniger Verbindung vorliegt, aufgebracht auf das oder mit dem katalytisch aktivem Metall.

8. Katalysator oder Vorläufer hiervon nach Anspruch 7, worin das anorganische Metallkation aus den Gruppen IIA, IIIA, IIIB, IVA, IVB und den Lanthaniden des Periodensystems der Elemente ausgewählt ist, vorzugsweise unter Al, Mg, Zr, Ti, La, Hf, Si und Ba, stärker bevorzugt Zr ist.

9. Verfahren zur katalytischen Partialoxidation eines kohlenwasserstoffhältigen Einsatzmaterials, welches Verfahren ein Inkontaktbringen eines Einsatzmaterials, das ein kohlenwasserstoffhältiges Einsatzmaterial und ein sauerstoffhältiges Gas umfaßt, mit einem Katalysator nach einem der Ansprüche 1 bis 8 umfaßt, vorzugsweise bei einem Druck im Bereich von 1 bis 150 bar absolut, bei einer Temperatur im Bereich von 750 bis 1.400°C und bei einer Gasraumgeschwindigkeit im Bereich von 20.000 bis 100.000.000 Nl/kg/h.

10. Verfahren nach Anspruch 9, worin das kohlenwasserstoffhältige Einsatzmaterial und das sauerstoffhältige Gas in Mengen vorliegen, die ein Sauerstoff/Kohlenstoff-Verhältnis von 0,3 bis 0,8, vorzugsweise von 0,45 bis 0,75 ergeben.

## Revendications

1. Catalyseur ou précurseur de celui-ci sous la forme d'un agencement fixe, dans lequel l'agencement fixe comprend
une première couche qui, en cours d'opération normale, agencée à l'extrémité amont de l'agencement fixe et comprend comme métal catalytiquement actif ou précurseur de celui-ci du rhodium ou un composé de rhodium, et
une seconde couche adjacente à la première couche sans intervalle entre la première et la seconde couche, qui est, en cours d'opération normale, agencée en aval de la première couche, la seconde couche comprenant comme métal catalytiquement actif ou précurseur de celui-ci de l'iridium, de l'osmium ou du platine ou un composé de ceux-ci.

2. Catalyseur ou précurseur de celui-ci sous la forme de particules de catalyseur ou de particules de précurseur de catalyseur comprenant une première couche, extérieure comprenant comme métal catalytiquement actif ou précurseur de celui-ci du rhodium ou un composé de rhodium et une seconde couche comprenant comme métal catalytiquement actif ou précurseur de celui-ci de l'iridium, de l'osmium ou du platine ou un composé de ceux-ci.

3. Catalyseur ou précurseur de celui-ci suivant l'une ou l'autre des revendications 1 et 2, dans lequel la seconde couche comprend de l'iridium ou un composé d'iridium.

4. Catalyseur ou précurseur de celui-ci suivant l'une quelconque des revendications précédentes, dans lequel la quantité en poids du métal catalytiquement actif de la seconde couche est au moins égale à la quantité de rhodium dans la première couche, avantageusement est au moins deux fois la quantité de rhodium dans la première couche, plus avantageusement au moins trois fois.

5. Catalyseur ou précurseur de celui-ci suivant l'une quelconque des revendications précédentes, dans lequel la première couche comprend de plus du platine ou un composé de platine.

6. Catalyseur ou précurseur de celui-ci suivant la revendication 5, dans lequel le rapport rhodium à platine (poids/poids) dans la première couche va de 1 à 20, avantageusement de 5 à 15.

7. Catalyseur ou précurseur de celui-ci suivant l'une quelconque des revendications précédentes, dans lequel le métal catalytiquement actif dans au moins une des couches est associé à au moins un cation de métal inorganique ou un précurseur de celui-ci d'une manière telle que la cation de métal inorganique soit présent en association intime, fixé sur ou avec le métal catalytiquement actif.

8. Catalyseur ou précurseur de celui-ci suivant la revendication 7, dans lequel le cation de métal inorganique est choisi dans les Groupes IIA, IIIA, IIIB, IVA, IVB et les lanthanides du Tableau Périodique des Eléments, avantageusement est choisi parmi Al, Mg, Zr, Ti, La, Hf, Si et Ba, plus avantageusement est du Zr.

9. Procédé d'oxydation partielle catalytique d'une charge d'alimentation hydrocarbonée, lequel procédé comprend la mise en contact d'une alimentation comprenant une charge d'alimentation hydrocarbonée et un gaz contenant de l'oxygène avec un catalyseur suivant l'une quelconque des revendications 1 à 8, avantageusement à une pression allant de 1 à 150 bars absolus, à une température allant de 750 à 1400°C, et à une vitesse spatiale horaire gazeuse allant de 20.000 à 100.000.000 Nl/kg/h.

10. Procédé suivant la revendication 9, dans lequel la charge d'alimentation hydrocarbonée et le gaz contenant de l'oxygène sont présents en des quantités conférant un rapport oxygène à carbone de 0,3 à 0,8, avantageusement de 0,45 à 0,75.
